# EUROPEAN PATENT APPLICATION

(11) **EP 3 778 238 A1**
(43) Date of publication of application: **17.02.2021**
(21) Application number: 19191563.6
(22) Date of filing: 13.08.2019
(51) Int. Cl.: B33Y 70/00, B33Y 80/00, C04B 28/00, E04C 2/04

(54) **SYSTEM AND METHOD FOR THE PRODUCTION OF 3D PRINTABLE ECO-FRIENDLY CONSTRUCTION ELEMENTS**

(71) Applicant: RiceHouse srl, 13811 Andorno Micca (BI) (IT)
(72) Inventor: Colombo, Alessio, 13811 Andorno Micca (IT)
(74) Representative: Rausch Wanischeck-Bergmann Brinkmann

(57) **Abstract**

To provide a system and a method for the production of eco-friendly construction elements, preferably by 3D printing which has most of the a.m. properties, are simple to produce, simple to handle and provides a very positive environmental balance and is adaptable to new construction methods an inventive system for the production of eco-friendly construction materials consisting of clay, water, a binder and a filler material as a natural building material, wherein the filler material consists of at least one of rice straw, rice husk and/or rice bran is provided.

## Description

The present invention refers to a system and a method for the production of eco-friendly construction elements, preferably by 3D printing.

Building material is any material used for construction purpose such as materials for house building. Wood, cement, aggregates, metals, bricks, concrete, clay are the most common type of building material used in the state of the art of construction. The choice of these are generally based on their cost effectiveness for building projects. Many naturally occurring substances, such as clay, sand, wood and rocks, even twigs and leaves have been used to construct buildings. Apart from naturally occurring materials, many man-made products are in use, some more and some less synthetic.

The manufacture of building materials is an established industry in many countries and the use of these materials is typically segmented into specific construction areas, such as carpentry, plumbing, roofing, insulation works, etc.

Construction materials can be generally categorized into two sources, natural and derived from the petrochemical industry, or also defined as synthetic. Natural materials are those that are unprocessed or minimally processed by industry, such as lumber, cork, stone cladding, etc.. The natural materials are healthier as they do not spread hazardous substances in the build environment. In addition, most of the natural materials are yearly renewable, they regenerate making part of the circular economy and not do produce hazardous waste, but instead, at the end of its lifecycle vanish in the nature. Few of the materials that can be found on the international market are 100% natural. Synthetic materials are made in industrial settings after much human manipulations, such as plastics and petroleum based paints. Most commonly these materials derived from virgin resources that are not renewable.

Mud, stone, and fibrous plants are the most basic materials, People all over the world have used these three materials together to create homes to suit their local weather conditions. These natural materials are used from ancient ages in the traditional architecture and have proven technical and esthetical characteristics.

In general, stone and/or brush are used as basic structural components in these buildings, while mud is used to fill in the space between, acting as a type of concrete and insulation. In Africa for example mud is used also for basic structural components.

Today the state of the art includes all kinds of building materials, but most common in use are brick and block, concrete, metal and glass. A brick is a block made of kiln-fired material, usually clay or shale, but also may be of lower quality mud, etc. Clay bricks are formed in a molding (the soft mud method), or in commercial manufacture more frequently by extruding clay through a die and then wire-cutting them to the proper size (the stiff mud process). Concrete is a composite building material made from the combination of aggregate (composite) and a binder such as cement. The most common form of concrete is Portland cement concrete, which consists of mineral aggregate (generally gravel and sand), portland cement and water.

Metal is used as structural framework for larger buildings such as skyscrapers, or as an external surface covering. There are many types of metals used for building. Steel is a metal alloy whose major component is iron, and is the usual choice for metal structural construction. It is strong, flexible, and if refined well and/or treated lasts a long time. Corrosion is metal's prime enemy when it comes to longevity. In recent years more and more wood high rise buildings are constructed worldwide, due to the technical qualities of the material, the low embodied energy, the renewability of the material and the fact that wood is not hazardous waste product.

Clear windows have been used since the invention of glass to cover small openings in a building. They provided humans with the ability to both let light into rooms while at the same time keeping inclement weather outside. Glass is generally made from mixtures of sand and silicates, and is very brittle. Modern glass "curtain walls" can be used to cover the entire facade of a building. Glass can also be used to span over a wide roof structure in a "space frame".

Modern building is a multibillion dollar industry, and the production and harvesting of raw materials for building purposes is on a worldwide scale. Often being a primary governmental and trade key point between nations. Environmental concerns are also becoming a major world topic concerning the availability and sustainability of certain materials, and the extraction of such large quantities needed for the human habitat. The construction sector is the third most polluting sector worldwide, responsible for 40% of the energy consumption, produces 36% of the CO2 released in the air, uses 50% of the raw materials and utilize 21% of the world drinkable water.

The list of building products exclusively excludes the materials, which are used to construct the building architecture and supporting fixtures like windows, doors, cabinets, etc. Today many people that are building or remodeling their houses choose to use eco-friendly building materials. An eco-friendly building material is one that increases the efficiency of energy used and reduces impact on human well-being and the environment. There are many different materials that can be used in the construction industry that are eco-friendly; from foundation, to insulation, to interior and exterior wall finishes, flooring, and countertop materials.

An eco-friendly building material describes a product that has been designed to do the least possible damage to the environment. Typically, eco-friendly construction means it consist of two parts - Material and Technique.

A material by itself can be eco-friendly, e.g. Bamboo.

Or even conventional materials can become eco-friendly based on the construction technique that is used. e.g. rat trap bond developed by Lauri Baker, which require less number of bricks and are more heat insulating than normal walls and therefore eco-friendly.

The various properties of the Eco-friendly materials and techniques are:
- renewability,
- reuse of waste products, reuse, recycle
- embodied energy
- local availability
- reduction of pollution (air, land, water), biodegradable
- durability and energy efficiency
- CO2 sequestration
healthy / wholesome for human. It is difficult to get a material that has all these properties, and it thus becomes a comparative assessment to identify eco-friendly materials.

Therefore, it is an object of the present invention to provide a system and a method for the production of eco-friendly construction elements realized by the materials which have most of the a.m. properties, are simple to produce, simple to handle and provide a very positive environmental, economic and social balance and is adaptable to new construction methods. This new virtues cycle creates new economies and activates local territories, transforming a residual into a source of value.

The solution is provided by a system for the production of eco-friendly construction materials with the features of claim 1. Further features and advantages become aware from the respective sub-claims. Furthermore, a solution is provided with regard to a method for the production of eco-friendly construction materials with features of claim 7. Further features and advantages become aware by the respective sub-claims. Further the material is claimed in claim 10.

Especially for the purpose of 3D printing the material mix includes a filler material which consists of at least two of the rice straw, rice husk and/or rice bran. It turned out that the mixture of clay, lime, water, binder can be brought out by a nozzle under pressure to form respective lines of material which, after a certain period of drying can be the carrier for the next line or row. Thus the material can be used for 3D printing of walls, wall elements and the like.

It is understood that the nozzle is part of a pumping system. The mixture is premixed in a tank and/or different parts of the premixture are in different storages or tanks and mixed in central mixing units. This may happen on site. Then the final material is pumped through a pipe system to a nozzle. A nozzle in the sense of the present invention is any kind of outlet which allows to bring out an intended amount of material. The nozzle itself and the respective pipes are controlled within a given 3-dimensional coordinate-system. That is, the outlet and of the pipe system, the nozzle, can be moved by respective motors and control elements like wires, spindels and the like to certain and given positions in a 3D coordinate system. Than the material can be pumped out at the desired position in the desired amount. By moving the nozzle along a given path a first line or row of material is brought out. It can be dried active or passive depending on the wired mantel conditions.

Active drying can include light, radiation, heating and the like.

So the nozzle can be moved along the path and then in a next higher level along the same path thereby building wall elements.

According to an aspect of the invention the material can be brought out into molds or restricted volumes e. g. to print cealings and the like.

According to the invention the most important aspect is to use a filler which consists of different residual materials from rice production. Those are rice straw, rice husk, rice bran and the like. In general, all kind of a rice residuals can be used. Together with typical basic mixtures for a mortar or a plaster as well as a finery like water and lime, and clay if required these materials can be used as an eco-friendly filler. A binder is used to produce a homogeneous construction material. This includes the different rice materials providing the required strength as well as insulation features and the like.

These construction materials can be used for the different construction purposes. Bricks can be pre-fabricated and used as bricks to build the walls. The material can be used as a plaster to cover e. g. rice straw walls, finishing's, screeds, etc.. This provides a high degree of thermal insulation, sound insulation and the like. A finery can provide a perfect optical surface and brings esthetical characteristic to the material. This can be colored e. g. using the boiling water of venus rice. This is a hybrid made from a black rice and an Italian local rice. It is known under "riso venere". In addition, other natural colorants are used, based on the requirement.

An advantage of the present invention is that the system can be used by producing different pre-mixtures which can be mixed together with clay water and the respective amounts of lime and binder produced to a construction elements on sight. Rice residuals and if required clay can be premixed and delivered to the construction site. Additionally, binder in dry form can be filled into the premix.

Additional additives, depending on the respective intended use can be wax, silica sand, glass fiber and the like. Depending on whether the construction material is planned for internal or external use the different ingredients can provide the respective properties. Additionally, the ash from the combustion of rice products, rice chaff, rice husk, rice straw and the like, can be used as an additive.

The different properties provided by the additives are
- wax > impermeability and water repellency
- silica sand > density and volume
- pumice pearls > lightness and volume
- glass fiber > mechanical strength
- ash from combustion of rice products > material that triggers chemical reaction with the clay and they clay reacts
- micronized carbonid powders > additive and accelerator of the chemical reaction
- methyl cellulose > water repellency, jellying agent
- lincid oil > thinner

The different pre mixtures for the different fields of use can be delivered to the site. Additionally, clay will be used to produce mortar, plaster and the like.

The invention provides a system and a method for the production of eco-friendly construction elements. Use these products for the production of construction material results in omitting huge volumes of waste every time rice is harvested. The utilization of the residuals resolves the problem of rice waste, reduces the burned CO2 that derive from the casual burn from the raw materials and includes an agricultural residue in a new productive cycle. Furthermore, the products have physical strength and very good installation properties.

Much more details, features and properties will be disclosed by the following description of several examples. Furthermore, an example for the use of the present invention is shown in a picture in the figures.
- Fig. 1: a perspective view on a printed wall;
- Fig. 2: a perspective view on a different part of the wall according to fig. 1 and
- Fig. 3: a schematic diagram showing a cross section example for a 3D printed wall.

### Example 1:

The bioplaster is a clay based composition including rice husk and rice straw. The plaster is obtained by mixing the clay with the rice husk and the rice straw, the agricultural products deriving from the husking of paddy rice. Binder and water will be added on sight. Lime will be added as well and according to the intended function silica sand and/or glass fiber can be added. The whole mixture is brought out under pressure by a nozzle.

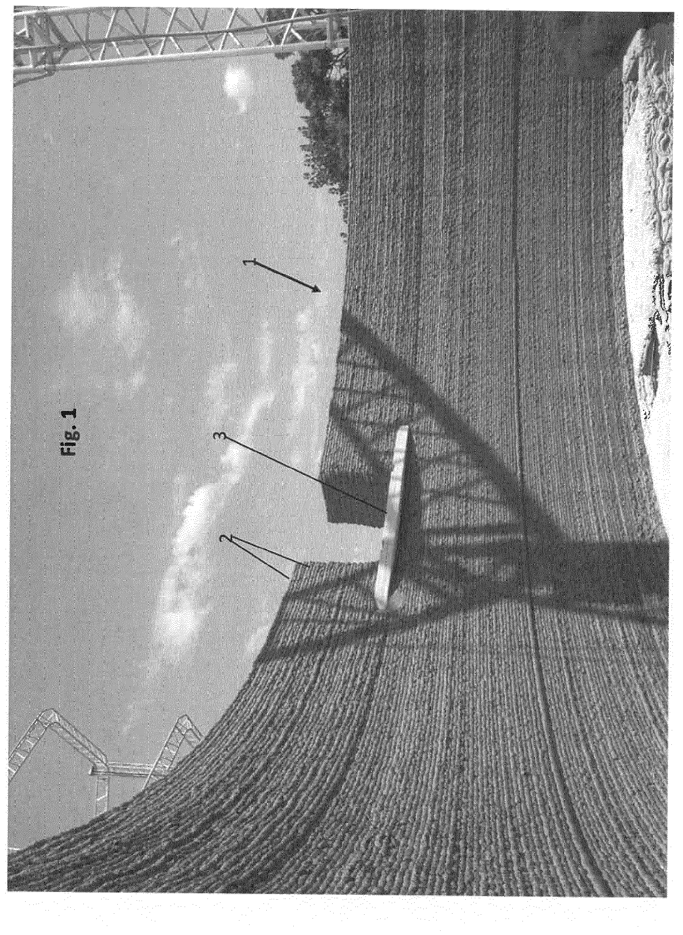

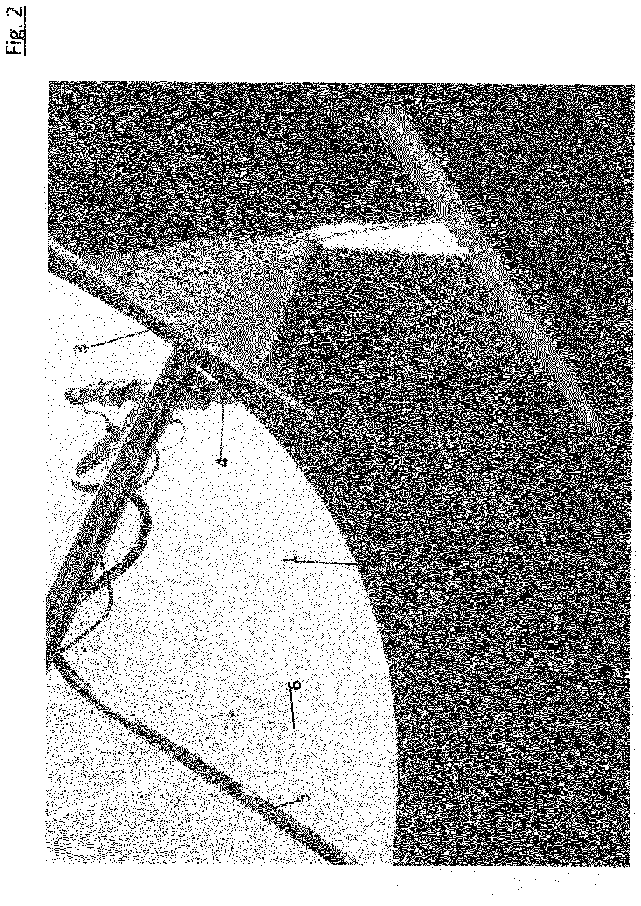

Figures 1 and 2 show an example for a 3D printed wall. The wall 1 consists of layers 2 made of the inventive bioplaster to use up the wall element. Mechanically required carrier elements 3 for carrying respective mechanical loads or providing defined contact positions may be including during the printing process.

As seen in Fig. 2 the mass is brought out via nozzle 4 which is connected to a pipe system 5 and a position control system including respective carriers 6.

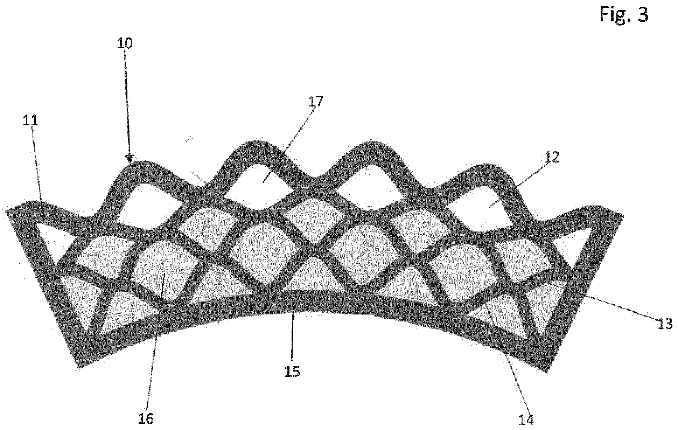

An example for a respective 3D printed wall is shown an Fig. 3. Fig. 3 shows a segment of a wall 10, which in the present example consists of waved walls 11, 12, 13 and 14. The inner wall 15 is made straight. The rice walls are printed in a way that there is a face shift thereby automatically providing vertical hollow areas 16 and 17. These areas can be according the insulation requirements filled e. g. with rice straw, filler mixtures of rice husk, rice bran and rice straw or maybe left open to provide thermal isolation via an aircushion.

The given examples and figures are not restricting.

### Reference list

- 1: wall
- 2: layer
- 3: carrier
- 4: nozzle
- 5: pipe
- 6: printer construction
- 10: wall
- 11: wall elements
- 12: wall elements
- 13: wall elements
- 14: wall elements
- 15: wall elements
- 16: volumes
- 17: volumes

## Claims

1. System for the production of 3D printable eco-friendly construction materials consisting of clay, water, a binder and a filler material as a natural building material, wherein the filler material consists of at least two of rice straw, rice husk and/or rice bran.

2. System according to claim 1, **characterized in that** the filler material, the clay and the binder are premixed.

3. System according to any of the preceding claims, **characterized in that** the filler material includes a premix of rice straw and rice husk.

4. System according to any of the preceding claims, **characterized in that** the construction material includes wax.

5. System according to any of the preceding claims, **characterized in that** the construction material includes silica sand.

6. System according to any of the preceding claims, **characterized in that** the construction material includes glass fibre.

7. Method for the production of wall elements including mixing a filler material as a natural building material, wherein the filler material consists of at least two of rice straw, rice husk, rice husk ashes and/or rice bran and adding the required amount of clay, binder, lime and water and pressing the mixture out of a nozzle in a predefined 3d coordinate system.

8. Method according to claim 14, **characterized in that** the mixture is dryed after it is pressed out.

9. Method according to any of the claims 14 to 15, **characterized in that** the mixture is pressed into molds

10. Eco-friendly construction material consisting of clay, water, a binder and a filler material as a natural building material, wherein the filler material consists of at least two of rice straw, rice husk and/or rice bran.

11. 3D printed wall element consisting of eco-friendly construction material according to any one of the preceding claims, **characterized in that** it included single wall levels with a waved cross section.
